# EUROPÄISCHE PATENTSCHRIFT

(11) **EP 4 551 626 B1**
(45) Veröffentlichungstag und Bekanntmachung des Hinweises auf die Patenterteilung: **28.01.2026**
(21) Anmeldenummer: 22800591.4
(22) Anmeldetag: 20.09.2022
(51) Int. Cl.: C08F 261/12, C08F 263/04

(54) **COPOLYMERE VON ZYKLISCHEN KETENACETAL-MONOMEREN**
COPOLYMERS OF CYCLIC KETENE ACETAL MONOMERS
COPOLYMÈRES DE MONOMÈRES D'ACÉTAL DE CÉTÈNE CYCLIQUE

(43) Veröffentlichungstag der Anmeldung: 14.05.2025
(73) Patentinhaber: Wacker Chemie AG, 81671 München (DE)
(72) Erfinder: ASCHERL, Laura, 81671 München (DE); BANNWARTH, Markus, 81671 München (DE); MELCHIN, Timo, 81671 München (DE)
(74) Vertreter: Ege, Markus
(86) Internationale Anmeldenummer: PCT/EP2022/076090
(87) Internationale Veröffentlichungsnummer: WO 2024/061448

(56) Entgegenhaltungen:
- US-B2- 11 111 328

## Beschreibung

Die Erfindung betrifft Copolymere von zyklischen Ketenacetal-Monomeren, insbesondere in Form von Festharzen oder wässrigen Dispersionen oder in Wasser redispergierbaren Pulvern, Verfahren zu deren Herstellung mittels radikalisch initiierter Polymerisation sowie deren Verwendung beispielsweise in Klebemitteln oder Beschichtungsmitteln, insbesondere zur Herstellung von textilen Flächengebilden.

Aus ökologischen Gründen besteht zunehmender Bedarf, die biologische Abbaubarkeit von Polymeren auf Basis ethylenisch ungesättigter Monomere, wie Acrylsäureestern, Vinylestern, Vinylhalogeniden oder Vinylaromaten, zu verbessern. Ein Lösungsansatz hierfür besteht im Einpolymerisieren von Comonomeren, die unter natürlichen Bedingungen labil sind. So beschreibt die US5541275 das Copolymerisieren von Vinylestern und zyklischen Ketenacetalen, konkret 2-Methylen-1,3-Dioxo-Kohlenwasserstoffzyklen, wie 2-Methylen-1,3-Dioxepan (MDO). Solche zyklischen Ketenacetal-Monomere können durch ringöffnende Polymerisation in die Polymerketten einpolymerisiert werden, wodurch Esterbindungen als Sollbruchstellen in das Rückgrat der Polymere eingebracht werden und die Bioabbaubarkeit der Polymere verbessert wird, wie beispielsweise in der US11111328 veranschaulicht.

Solche labilen Monomere können allerdings bereits unter Polymerisationsbedingungen instabil sein und zu Neben- oder Abbaureaktionen neigen, so dass es eine Herausforderung darstellt, die labilen Monomere gezielt und möglichst vollständig in die Polymere einzupolymerisieren. So neigen zyklische Ketenacetale bereits unter den Bedingungen der wässrigen Emulsionspolymerisation zu Hydrolyse und sind dann nicht mehr polymerisierbar, wie US5541275 und US11111329 betonen. Beispielsweise hydrolysiert MDO in Wasser instantan zum entsprechenden Essigsäure-4-Hydroxybutylester folgender Formel:

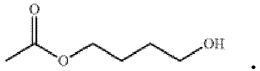

Auch C.U. Pittman, Journal of Organic Chemistry, 1995, 60, Seiten 5729 bis 5731 und B. Capon, Journal of American Chemical Society, Vol. 103, No. 7, 1981, Seiten 1765 bis 1768 berichten von einer schnellen Hydrolyse von 2-Methylen-1,3-Dioxo-Kohlen-wasserstoffzyklen, wie 2-Methylen-1,3-Dioxolan oder 2-Methylen-1,3-Dioxepan. In der Literatur wird zwar die Emulsionspolymerisation von MDO oder anderen zyklischen Ketenacetal-Monomeren diskutiert, jedoch zeigten eigene Nachstellungen solcher Ansätze keinen signifikanten Einbau der hydrolyselabilen Monomere in die Polymere, sondern stattdessen primär die Bildung der jeweiligen Hydrolyseprodukte, wie beispielhaft mit Vergleichsbeispiel 9 der vorliegenden Anmeldung belegt. Auch eigene Experimente zur Hydrolysekinetik zyklischer Ketenacetale erklären diese Probleme bei der Emulsionspolymerisation.

Bereits säurehaltige Vinylcomonomere, wie Acrylsäure, können zur Hydrolyse von zyklischen Ketenacetalen führen, so dass es eine besondere Herausforderung darstellt, Copolymere von säurehaltigen Vinylmonomeren und zyklischen Ketenacetal-Monomeren herzustellen. Zudem können zyklische Ketenacetale unvorteilhafte Copolymerisationseigenschaften aufweisen, so dass auch deswegen keine Copolymere gebildet werden. Zusammenfassend bereitet es also besondere Probleme, Copolymere von zyklischen Ketenacetalen und säurehaltigen Vinylmonomeren bereitzustellen, insbesondere in Form von wässrigen Dispersionen.

Die US10287380 BB beschreibt die Herstellung von Copolymeren von 80 bis 98 Gew.-% Methacrylsäureestern und 2 bis 10 Gew.-% zyklischen Ketenacetalen nach Masse- oder Lösungspolymerisationsverfahren. Die JP2017210503 betrifft Masse- oder Lösungspolymerisate von Methacrylsäureestern a1) und zyklischen Ketenacetalen a2) mit einem Gewichtsverhältnis a2)/a1) von 1/99 bis 20/80. Die US11111328 und US11111329 beschreiben Emulsionspolymerisationen unter Einsatz von Vinylestern, zyklischen Ketenacetalen und ethylenisch ungesättigten Säuremonomeren.

Vor diesem Hintergrund bestand die Aufgabe, Copolymere von zyklischen Ketenacetal-Monomeren und Säure-Gruppen tragenden ethylenisch ungesättigten Monomeren bereitzustellen, insbesondere in Form von wässrigen Dispersionen.

Überraschenderweise wurde die Aufgabe gelöst, indem zuerst Copolymere mittels mehrstufiger, radikalisch initiierter Masse-oder Lösungspolymerisation von a) zyklischen Ketenacetal-Monomeren und weiteren ethylenisch ungesättigten Monomeren und b) ethylenisch ungesättigten, Säure-Gruppen tragenden Monomeren hergestellt wurden und die so erhaltenen Copolymere anschließend in wässrige Dispersionen überführt wurden. Hierfür erwies es sich als essentiell, bei der Mehrstufenpolymerisation in einer ersten Stufe a) die zyklischen Ketenacetal-Monomere mit den weiteren ethylenisch ungesättigten Monomeren zu polymerisieren und anschließend in einer weiteren Stufe b) die ethylenisch ungesättigten, Säure-Gruppen tragenden Monomere zu polymerisieren.

Ein Gegenstand der Erfindung sind Mehrstufen-Copolymere, insbesondere in Form von Festharzen, erhältlich mittels mehrstufiger, radikalisch initiierter Masse- oder Lösungspolymerisation, dadurch gekennzeichnet, dass
a) in einer ersten Stufe ein oder mehrere zyklische Ketenacetal-Monomere a1) und ein oder mehrere Monomere a2) ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine, Diene, Vinylaromaten und Vinylhalogenide copolymerisiert werden, und
b) in einer weiteren Stufe in Gegenwart des Copolymers aus der ersten Stufe a) ein oder mehrere ethylenisch ungesättigte, Säure-Gruppen tragende Monomere b1) polymerisiert werden.

Die Mehrstufen-Copolymere liegen vorzugsweise in Form von Festharzen, in Form von wässrigen Dispersionen oder in Form von in Wasser redispergierbaren Pulvern vor.

Ein weiterer Gegenstand der Erfindung sind Mehrstufen-Copolymere in Form von wässrigen Dispersionen, erhältlich mittels Dispergieren von einem oder mehreren der erfindungsgemäßen Mehrstufen-Copolymeren, beispielsweise in Form von Festharzen, in Wasser.

Ein weiterer Gegenstand der Erfindung sind Mehrstufen-Copolymere in Form von in Wasser redispergierbaren Pulvern, erhältlich durch Trocknen von wässrigen Dispersionen der erfindungsgemäßen Mehrstufen-Copolymere.

Die erfindungsgemäßen Mehrstufen-Copolymere unterscheiden sich in Folge ihrer Herstellung mittels mehrstufiger Polymerisation zwangsläufig strukturell von Polymerisationsprodukten aus einstufigen Polymerisationsverfahren. Dies kann sich beispielsweise in unterschiedlicher Dispergierbarkeit in Wasser oder in unterschiedlichen Glasübergangstemperaturen Tg von erfindungsgemäßen Mehrstufen-Copolymeren und herkömmlichen Einstufenpolymeren trotz gleicher Monomerzusammensetzung äußern. Damit schlägt sich das Verfahrensmerkmal der mehrstufigen Polymerisation in strukturellen Merkmalen der Mehrstufen-Copolymere nieder.

Bevorzugt sind zyklische Ketenacetal-Monomere a1) der allgemeinen Formel 1 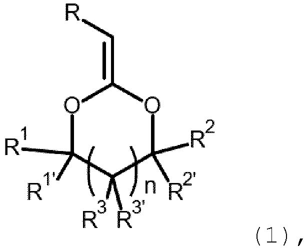
worin n = 0, 1, 2 oder 3 bedeutet;
R für ein Wasserstoffatom oder einen C₁-C₆-Alkyl-Rest steht;
R¹ und R² jeweils unabhängig voneinander für ein Wasserstoffatom, einen C₁-C₁₂-Alkyl-, Phenyl-, Vinyl- oder Halogen-Rest stehen; oder R¹ und R² zusammen mit den Kohlenstoffatomen, an die sie gebunden sind, einen fusionierten Benzolring oder einen fusionierten C₃-C₇-cycloaliphatischen Ring bilden; und
R¹' und R²' jeweils unabhängig voneinander für ein Wasserstoffatom, einen C₁-C₁₂-Alkyl-, Phenyl-, Vinyl- oder Halogen-Rest stehen; oder R¹ und R¹' und/oder R² und R²' eine exocyklische Doppelbindung bilden; und
R³ und R³' jeweils unabhängig voneinander für ein Wasserstoffatom, einen C₁-C₁₂-Alkyl-, Phenyl-, Vinyl- oder Halogen-Rest stehen; oder R³ und R³' eine exocyclische Doppelbindung oder eine spirocycloaliphatische Gruppe oder eine Spiro-2-methylen-1,3-dioxepane-Gruppe bilden; oder R³ und R³' mit den Kohlenstoffatomen, an die sie gebunden sind, eine interne Doppelbindung, einen fusionierten Benzolring oder einen fusionierten C₃-C₇-cycloaliphatischen Ring bilden;
wobei gegebenenfalls eine oder mehrere vorzugsweise nicht benachbarte -(CR³R³')-Gruppen, besonders bevorzugt eine -(CR³R³')-Gruppe durch ein Sauerstoffatom ersetzt sind.

Vorzugsweise, wenn n = 1 ist, stehen R³ und R³' jeweils unabhängig voneinander für ein Wasserstoffatom, einen C₁-C₁₂-Alkyl-, Phenyl-, Vinyl- oder Halogen-Rest; oder R³ und R³' bilden eine exocyclische Doppelbindung oder eine spirocycloaliphatische Gruppe oder eine Spiro-2-methylen-1,3-dioxepane-Gruppe.

Vorzugsweise, wenn n = 2 ist, stehen R³ und R³' jeweils unabhängig voneinander für ein Wasserstoffatom, einen C₁-C₁₂-Alkyl-, Phenyl-, Vinyl- oder Halogen-Rest; oder R³ und R³' bilden mit den Kohlenstoffatomen, an die sie gebunden sind, eine interne Doppelbindung, einen fusionierten Benzolring oder einen fusionierten C₃-C₇-cycloaliphatischen Ring.

In der allgemeinen Formel (1) für die zyklischen Ketenacetal-Monomere a1) nimmt n vorzugsweise den Wert 2 an.

Die Reste R, R¹, R¹, R², R²', R³ sowie R³' stehen jeweils unabhängig voneinander vorzugsweise für ein Wasserstoffatom oder einen Methyl-, Ethyl-, Propyl-, Butyl-, Phenyl- oder Benzyl-, Chlor-Rest; besonders bevorzugt für ein Wasserstoffatom oder einen Methyl-, Phenyl- oder Benzyl-Rest; und am meisten bevorzugt für ein Wasserstoffatom oder einen Methyl-Rest.

In einer bevorzugten Ausführungsform der Formel (1) ist n = 2 und R, R¹, R¹', R², R²', R³ sowie R³' stehen je für ein Wasserstoffatom.

Beispiele für cyclische Ketenacetalmonomere umfassen 2-Methylen-1,3-dioxolan, 2-Methylen-4-methyl-1,3-dioxolan, 2-Methylen-4,5-dimethyl-1,3-dioxolane, 8-Methylen-7,9-dioxabicyclo[4.3.0]-nonan, 2-Methylen-1,3-dioxan, 2-Methylen-5-methyl-1,3-dioxan, 2-Methylen-5,5-dimethyl-1,3-dioxan, 2-Methylen-1,3-dioxolan-5-spirocyclopentan, 2-Methylen-1,3-dioxolane-5-spirocyclopentan, 2-Methylen-1,3-Dioxepan, 2-Methylen-1,3-dioxocan, 2-Methylen-4-phenyl-1,3-dioxolan, 4,7-Dimethyl-2-methylen-1,3-dioxepan, 5,6-Benzo-2-methylen-1,3-dioxepan, 2-Methylen-1,3,6-trioxocan und 2-Methylen-1,3,5-Trioxan.

Am meisten bevorzugt ist 2-Methylen-1,3-Dioxepan (MDO).

Die Herstellung zyklischer Ketenacetal-Monomere a1) ist literaturbekannt und beispielhaft in der JP2017210503 beschrieben. Zyklische Ketenacetal-Monomere sind auch kommerziell verfügbar.

Die Mehrstufen-Copolymere basieren zu vorzugsweise 5 bis 99 Gew.-%, mehr bevorzugt 15 bis 95 Gew.-%, noch mehr bevorzugt 20 bis 70 Gew.-%, besonders bevorzugt 22 bis 50 Gew.-% und am meisten bevorzugt 25 bis 40 Gew.-% auf zyklischen Ketenacetal-Monomeren a1), bezogen auf das Gesamtgewicht der Monomere der Stufe a) oder der Monomere a1), a2) und gegebenenfalls a3).

Die Mehrstufen-Copolymere basieren zu vorzugsweise 5 bis 99 Gew.-%, mehr bevorzugt 15 bis 95 Gew.-%, noch mehr bevorzugt 20 bis 70 Gew.-%, besonders bevorzugt 22 bis 50 Gew.-% und am meisten bevorzugt 25 bis 40 Gew.-% auf zyklischen Ketenacetal-Monomeren a1), bezogen auf das Gesamtgewicht der Mehrstufen-Copolymere.

Die ringöffnende Polymerisation der zyklischen Ketenacetal-Monomere a1) führt allgemein zu Monomereinheiten a1) folgender Formel (2):

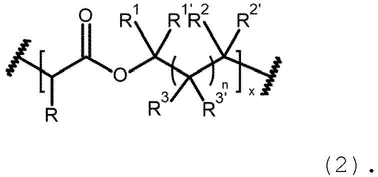

Die Monomereinheiten a1) enthalten vorzugsweise eine Ester-Gruppe und sind besonders bevorzugt ein aliphatischer Rest mit einer Ester-Gruppe, die am meisten bevorzugt keine weitere funktionelle Gruppe tragen.

Die Monomere a2) der ersten Stufe a) werden ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine, Diene, Vinylaromaten und Vinylhalogenide.

Bevorzugte Vinylester sind Vinylacetat, Vinylpropionat, Vinylbutyrat, Vinyl-2-ethylhexanoat, Vinyllaurat, Vinylstearat, 1-Methylvinylacetat, Vinylpivalat und Vinylester von verzweigten oder unverzweigten Monocarbonsäuren mit 5 bis 20 C-Atomen, wie Vinylester von alpha-verzweigten Monocarbonsäuren mit 5 bis 13 C-Atomen, beispielsweise VeoVa9R oder VeoVa10R (Handelsnamen der Firma Hexion). Besonders bevorzugt ist Vinylacetat.

Bevorzugte Methacrylsäureester oder Acrylsäureester sind Ester von unverzweigten oder verzweigten Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat, n-Butyl-Methacrylat und 2-Ethylhexylacrylat.

Bevorzugte Olefine oder Diene sind Ethylen, Propylen und 1,3-Butadien. Bevorzugte Vinylaromaten sind Styrol und Vinyltoluol. Ein bevorzugtes Vinylhalogenid ist Vinylchlorid.

Bevorzugte Monomere a2) sind Methacrylsäureester oder Acrylsäureester und insbesondere Vinylester, wie Vinylacetat.

Besonders bevorzugt ist auch der Einsatz von mehreren Monomeren a2) (Monomerengemisch a2)).

Beispiele für Monomerengemische a2) sind Vinylacetat mit Ethylen, Monomerengemische a2) von Vinylacetat mit Ethylen und einem oder mehreren weiteren Vinylestern, Monomerengemische a2) von Vinylacetat mit Ethylen und Acrylsäureester, Monomerengemische a2) von Vinylacetat mit Ethylen und Vinylchlorid, Monomerengemische a2) von Styrol und (Meth)Acrylsäureestern und Monomerengemische a2) von Styrol mit 1,3-Butadien.

Bevorzugt sind Monomerengemische a2) von Vinylacetat mit 1 bis 40 Gew.-% Ethylen; Monomerengemische a2) von Vinylacetat mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9R, VeoVa10R, VeoVa11R; Monomerengemische a2) von Vinylacetat, 1 bis 40 Gew.-% Ethylen und vorzugsweise 1 bis 60 Gew.-% (Meth)Acrylsäureester von unverzweigten oder verzweigten Alkoholen mit 1 bis 15 C-Atomen, insbesondere n-Butylacrylat oder 2-Ethylhexylacrylat; und Monomerengemische a2) mit 30 bis 75 Gew.-% Vinylacetat, 1 bis 30 Gew.-% Vinyllaurat oder Vinylester einer alpha-verzweigten Carbonsäure mit 5 bis 13 C-Atomen, sowie 1 bis 30 Gew.-% (Meth)Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten können; Monomerengemische a2) mit Vinylacetat, 1 bis 40 Gew.-% Ethylen und 1 bis 60 Gew.-% Vinylchlorid; wobei sich die Angaben in Gew.-% auf jeweils 100 Gew.-% aufaddieren, bezogen auf das Gesamtgewicht der Monomerengemische a2).

Bevorzugt werden auch Monomerengemische a2) von Methylmethacrylat mit n-Butylacrylat und/oder 2-Ethylhexylacrylat und gegebenenfalls Ethylen; Monomerengemische a2) von Styrol und einem oder mehreren Monomeren aus der Gruppe Methylacrylat, Ethylacrylat, Propylacrylat, n-Butylacrylat, 2-Ethylhexylacrylat; Monomerengemische a2) von Vinylacetat mit einem oder mehreren Monomeren aus der Gruppe Methylacrylat, Ethylacrylat, Propylacrylat, n-Butylacrylat, 2-Ethylhexylacrylat und gegebenenfalls Ethylen; Monomerengemische a2) von Styrol mit 1,3-Butadien; wobei sich die Angaben in Gew.-% auf jeweils 100 Gew.-% aufaddieren, bezogen auf das Gesamtgewicht der Monomerengemische a2).

Die Mehrstufen-Copolymere basieren zu vorzugsweise 1 bis 95 Gew.-%, mehr bevorzugt 5 bis 85 Gew.-%, besonders bevorzugt 30 bis 80 Gew.-% und am meisten bevorzugt 60 bis 75 Gew.-% auf Monomeren a2), bezogen auf das Gesamtgewicht der Monomere der Stufe a) oder der Monomere a1), a2) und gegebenenfalls a3).

Die Mehrstufen-Copolymere basieren zu vorzugsweise 1 bis 95 Gew.-%, mehr bevorzugt 5 bis 85 Gew.-%, besonders bevorzugt 30 bis 80 Gew.-% und am meisten bevorzugt 60 bis 75 Gew.-% auf Monomeren a2), bezogen auf das Gesamtgewicht der Mehrstufen-Copolymere.

Die Copolymere aus der ersten Stufe a) können gegebenenfalls zusätzlich auf einem oder mehreren Hilfsmonomeren a3) basieren. Beispiele für Hilfsmonomere a3) sind ethylenisch ungesättigte Carbonsäureamide, vorzugsweise Acrylamid; Diester der Fumarsäure wie die Diethyl- und Diisopropylester. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacry-loxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere Beispiele sind auch Vinylether, wie Methyl-, Ethyl- oder iso-Butylvinylether.

Die Mehrstufen-Copolymere basieren zu vorzugsweise 0 bis 20 Gew.-%, besonders bevorzugt 0,5 bis 10 Gew.-% auf Hilfsmonomeren a3), bezogen auf das Gesamtgewicht der Monomere der Stufe a) oder der Monomere a1), a2) und gegebenenfalls a3).

Die Mehrstufen-Copolymere basieren zu vorzugsweise 0 bis 20 Gew.-%, besonders bevorzugt 0,5 bis 10 Gew.-% auf Hilfsmonomeren a3), bezogen auf das Gesamtgewicht der Mehrstufen-Copolymere.

Die Mehrstufen-Copolymere basieren zu vorzugsweise 85 bis 99,5 Gew.-%, besonders bevorzugt 90 bis 99 Gew.-% und am meisten bevorzugt 92 bis 97 Gew.-% auf den Monomeren a1), a2) und gegebenenfalls a3), bezogen auf das Gesamtgewicht der Mehrstufen-Copolymere.

In Stufe a) werden vorzugsweise keine ethylenisch ungesättigten Säure-Monomere und/oder vorzugsweise keine ethylenisch ungesättigten Anhydride copolymerisiert, besonders bevorzugt keine Monomere b1) copolymerisiert.

Bei den ethylenisch ungesättigten, Säure-Gruppen tragenden Monomeren b1) kann es sich beispielsweise um ethylenisch ungesättigte Carbonsäuren, ethylenisch ungesättigte Anhydride, ethylenisch ungesättigte Phosphorsäuren, ethylenisch ungesättigte Sulfonsäuren oder ethylenisch ungesättigte Schwefelsäuren oder um deren Salze handeln.

Beispiele für ethylenisch ungesättigte Carbonsäuren sind Acrylsäure, Methacrylsäure, Ethacrylsäure, Itaconsäure, Crotonsäure, Maleinsäure und Fumarsäure, Vinylessigsäure; oder Monoester der Maleinsäure oder Fumarsäure, wie die Monoethyl- und Monoisopropylester. Beispiele für ethylenisch ungesättigte Anhydride sind Maleinsäureanhydrid, Methacrylsäureanhydrid und Acrylsäureanhydrid. Beispiele für ethylenisch ungesättigte Phosphorsäuren sind Vinylphosphonsäure, Phosphorsäure-2-hydroxyethylmethacry-latester, Phosphoethylmethacrylat und 2-(Methacryloyloxy)ethylphosphonsäure. Beispiele für ethylenisch ungesättigte Sulfonsäuren sind 2-Acrylamido-2-methyl-1-propansulfonsäure (AMPS), Vinylsulfonsäure, Allylsulfonsäure, Methylallylsulfonsäure, Styrolsulfonsäure, Vinylbenzolsulfonatm 2-Sulfoethylacrylat, 2-Sulfoethylmethacrylat, 3-Sulfopropylacrylat, 3-Sulfopropylmethacrylat, 2-Propen-1-sulfonsäure und Acrylamidoglykolsäure.

Bevorzugt als Monomeren b1) sind ethylenisch ungesättigte Sulfonsäuren und insbesondere ethylenisch ungesättigte Carbonsäuren.

Bevorzugte ethylenisch ungesättigte Carbonsäuren sind Acrylsäure, Methacrylsäure und Fumarsäure. Bevorzugte ethylenisch ungesättigte Sulfonsäuren sind Vinylsulfonsäure und 2-Acrylamido-2-methyl-propansulfonsäure.

Die Mehrstufen-Copolymere basieren zu vorzugsweise 0,5 bis 15 Gew.-%, besonders bevorzugt 1 bis 10 Gew.-% und am meisten bevorzugt 3 bis 8 Gew.-% auf Monomeren b1), bezogen auf das Gesamtgewicht der Monomere der Stufe a) oder der Monomere a1), a2) und gegebenenfalls a3).

Die Mehrstufen-Copolymere basieren zu vorzugsweise 25 bis 100 Gew.-%, besonders bevorzugt 50 bis 100 Gew.-% und am meisten bevorzugt 90 bis 100 Gew.-% auf Monomeren b1), bezogen auf das Gesamtgewicht der Monomere der Stufe b) oder der Monomere b1) und b2).

Die Mehrstufen-Copolymere basieren zu vorzugsweise 0,5 bis 15 Gew.-%, besonders bevorzugt 1 bis 10 Gew.-% und am meisten bevorzugt 3 bis 8 Gew.-% auf Monomeren b1), bezogen auf das Gesamtgewicht der Mehrstufen-Copolymere.

Des Weiteren können in Stufe b) ein oder mehrere weitere, von den Monomeren b1) verschiedene ethylenisch ungesättigte Monomere b2) copolymerisiert werden.

Bei den Monomere b2) kann es sich beispielsweise um die oben genannten Monomere a2) und/oder Hilfsmonomere a3) handeln, mit den oben genannten Bevorzugungen.

Die Mehrstufen-Copolymere basieren zu vorzugsweise 0 bis 75 Gew.-%, mehr bevorzugt 0 bis 50 Gew.-% und noch mehr bevorzugt 0 bis 10 Gew.-% auf Monomeren b2), bezogen auf das Gesamtgewicht der Monomere der Stufe b) oder der Monomere b1) und b2).

Besonders bevorzugt werden in Stufe b) keine Monomere b2) eingesetzt.

In Stufe b) werden besonders bevorzugt auch keine zyklischen Ketenacetal-Monomere a1) eingesetzt.

Am meisten bevorzugt werden in Stufe b) ausschließlich Monomere b1) eingesetzt.

Im Anschluss an Stufe a) und vor Stufe b) kann eine weitere Polymerisation weiterer ethylenisch ungesättigter Monomere erfolgen. Auch können in Anschluss an Stufe b) weitere ethylenisch ungesättigte Monomere polymerisiert werden. Vorzugsweise erfolgt Stufe b) unmittelbar im Anschluss an Stufe a) und/oder vorzugsweise erfolgt in Anschluss an Stufe b) keine weitere Polymerisation.

Die Monomerauswahl bzw. die Auswahl der Gewichtsanteile der Comonomere erfolgt dabei so, dass im Allgemeinen eine Glasübergangstemperatur Tg von -65°C bis +65°C, vorzugsweise -20°C bis +20°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + **...** + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Ein weiterer Gegenstand der Erfindung sind Verfahren zur Herstellung der Mehrstufen-Copolymere, vorzugsweise in Form von Festharzen, mittels mehrstufiger, radikalisch initiierter Masse- oder Lösungspolymerisation, dadurch gekennzeichnet, dass
a) in einer ersten Stufe ein oder mehrere zyklische Ketenacetal-Monomere a1) und ein oder mehrere Monomere a2) ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine, Diene, Vinylaromaten und Vinylhalogenide copolymerisiert werden, und
b) in einer weiteren Stufe in Gegenwart des Copolymers aus der ersten Stufe a) ein oder mehrere ethylenisch ungesättigte, Säure-Gruppen tragende Monomere b1) polymerisiert werden.

Im Allgemeinen werden also sowohl Stufe a) als auch Stufe b) nach Masse- und/oder Lösungspolymerisationsverfahren polymerisiert.

Die Polymerisationstemperatur beträgt vorzugsweise 30°C bis 120°C, besonders bevorzugt 40°C bis 100°C und am meisten bevorzugt 50°C bis 90°C. Bei der Copolymerisation von gasförmigen Comonomeren, wie Ethylen, wird vorzugsweise unter Druck, im Allgemeinen zwischen 5 bar und 100 bar, polymerisiert.

Die Initiierung der Polymerisation kann mit den für Masse- beziehungsweise Lösungspolymerisationsverfahren gebräuchlichen Initiatoren erfolgen, wie beispielsweise Perester, Perdicarbonate, Diacylperoxide wie Di-tert.-amylperoxyoxalat, tert.-Amylperoxyneodecandat, tert.-Butylperoxyneodecanoat, tert.-Amylperoxypivalat, tert.-Butylperoxypivalat und Dicyclohexylperoxydicarbonat. Gegebenenfalls können die genannten radikalischen Initiatoren auch in bekannter Weise mit Reduktionsmittel kombiniert werden. Geeignet sind zum Beispiel Formaldehydsulfoxylat-Salze oder Ascorbinsäure. Bei der Redoxinitiierung werden dabei vorzugsweise eine oder beide Redox-Katalysatorkomponenten während der Polymerisation dosiert. Vorzugsweise beträgt die eingesetzte Menge an Radikalinitiator 0,005 bis 1 Mol-%, bezogen auf die Comonomerphase.

Zur Steuerung des Molekulargewichts können während der Polymerisation gängige regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt. Regler werden vorzugsweise separat oder auch vorgemischt mit Reaktionskomponenten dosiert. Beispiele für Regler sind n-Dodecylmercaptan, tert.-Dodecylmercaptan, Mercaptopropionsäure, Mercaptopropionsäuremethylester und Acetaldehyd.

Die Monomere in Stufe a) können ganz oder vorzugsweise teilweise vorgelegt werden, und die gegebenenfalls verbliebene Menge an Monomeren kann während der Polymerisation zudosiert werden.

Nach vollständiger Dosierung der Monomere aus Stufe a) werden allgemein die Monomere der Stufe b) dosiert. Die Dosierung der Monomere der Stufe b) beginnt vorzugsweise nach vollständiger oder weitgehend vollständiger Polymerisation der Monomere der Stufe a), insbesondere nach einem Umsatz der Monomere der Stufe a) von mindestens 85%, mehr bevorzugt mindestens 90% und besonders bevorzugt mindestens 95%.

Etwaige Emulgatoren und etwaige Schutzkolloide können ganz oder vorzugsweise teilweise vorgelegt werden und die etwaigen verbliebenen Mengen an Emulgatoren und/oder Schutzkolloiden können während der Polymerisation zudosiert werden. Entsprechende Emulgatoren und/oder Schutzkolloiden sind weiter unten konkret beschrieben. Vorzugsweise erfolgt die Polymerisation in Abwesenheit von Emulgatoren und/oder Schutzkolloiden.

Die Mehrstufen-Copolymere sind vorzugsweise nicht Emulgatorstabilisiert und/oder vorzugsweise nicht Schutzkolloide-stabilisiert.

Die Massepolymerisation erfolgt allgemein ohne Zugabe von Lösungsmitteln beziehungsweise in Abwesenheit von Lösungsmitteln, also in Masse.

Die Lösungspolymerisation erfolgt vorzugsweise in einem oder mehreren nichtwässrigen, organischen Lösungsmitteln, besonders bevorzugt aprotischen organischen Lösungsmitteln, wie beispielsweise Estern, Ethern oder Ketonen. Ester sind besonders bevorzugt. Die organischen Lösungsmittel enthalten vorzugsweise 1 bis 12 Kohlenstoffatome und besonders bevorzugt 1 bis 8 Kohlenstoffatome. Beispiele für Ether sind Dioxan, Tetrahydrofuran, Diethylether, Di-isopropylether und Diethylenglycoldimethylether. Beispiele für Ester sind Ethylacetat, Butylacetat, Propylpropionat, Ethylbutyrat und Ethyl-isobutyrat. Besonders bevorzugte Lösungsmittel sind Ethylacetat und Aceton. Vorzugsweise wird kein Alkohol, insbesondere kein Methanol, Ethanol, Propanol, Butanol und Benzylalkohol, als Lösungsmittel eingesetzt.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die Mehrstufen-Copolymere der Stufen a) und/oder b) des erfindungsgemäßen Verfahrens liegen vorzugsweise in Form von Schmelzen, Festharzen oder in Form von Lösungen oder Dispersionen vor.

Die mittels Lösungspolymerisation erhaltenen Mischungen können nach gängigen Verfahren in Festharze überführt werden, beispielsweise durch Ausfällen, Filtrieren und anschließender Trocknung, oder durch Dekantieren und anschließendem Trocknen isoliert werden. Das Trocknen kann in bekannter Weise beispielsweise in einem Trommeltrockner, in einem Strömungsrohr, im Fließbett, oder in einem Zyklontrockner erfolgen.

Ein weiterer Gegenstand der Erfindung sind Verfahren zur Herstellung von Mehrstufen-Copolymeren in Form von wässrigen Dispersionen, dadurch gekennzeichnet, dass ein oder mehrere erfindungsgemäße Mehrstufen-Copolymere in Wasser dispergiert werden.

Zur Herstellung der Mehrstufen-Copolymere in Form von wässrigen Dispersionen können generell Mehrstufen-Copolymere in Form von Festharzen oder die mittels Lösungspolymerisation erhaltenen Mischungen eingesetzt werden. Mittels Massepolymerisation erhaltene Schmelzen können auch direkt in wässrige Dispersionen überführt werden.

Die mittels Lösungspolymerisation erhaltenen Mischungen können beispielweise mit Wasser versetzt oder in Wasser gegeben werden und anschließend das organische Lösungsmittel entfernt werden, vorzugsweise möglichst vollständig, beispielsweise destillativ, gegebenenfalls im Vakuum. Mehrstufen-Copolymere in Form von Schmelzen, beispielsweise erhalten durch Massepolymerisation oder durch Schmelzen von Festharzen, können direkt in Wasser eingebracht und dispergiert werden, beispielsweise unter Rühren mit herkömmlichen Rühraggregaten. Mehrstufen-Copolymere in Form von Festharzen können direkt in Wasser dispergiert werden, analog wie oben für Schmelzen beschrieben. Diese Verfahren sind besonders effizient.

Alternativ können Mehrstufen-Copolymere in Form von Festharzen oder Schmelzen auch erst mit einem oder mehreren organischen Lösungsmitteln gelöst werden, vorzugsweise mit wasserlöslichen Lösungsmitteln, beispielsweise Alkoholen wie Methanol oder Ethanol, Ethern wie THF, oder insbesondere Ketonen wie Aceton, und dann mit Wasser versetzt oder in Wasser gegeben werden, und anschließend das organische Lösungsmittel entfernt werden, vorzugsweise möglichst vollständig, beispielsweise destillativ, gegebenenfalls im Vakuum. Die organischen Lösungsmittel haben hierbei üblicherweise einen niedrigeren Siedepunkt als Wasser, insbesondere unter den beim Lösungsmittelaustausch vorliegenden Bedingungen.

Das Mischen der Mehrstufen-Copolymere mit Wasser und/oder das Lösen der Festharze in organischem Lösungsmittel kann allgemein bei Raumtemperatur oder erhöhter Temperatur, bei Umgebungsdruck oder erhöhtem Druck erfolgen. Vorzugsweise erfolgt das Lösen unterhalb des Siedepunkts des organischen Lösungsmittels bei dem im Einzelfall angewendeten Druck.

Für das Überführen der Mehrstufen-Copolymere in wässrige Dispersionen können hierfür herkömmliche Vorrichtungen und gängige Mischaggregate verwendet werden, beispielsweise Rühraggregate mit hohen Schwerraten, wie Ultrathurrax-Rührer.

Die Mehrstufen-Copolymere werden vorzugsweise mit einer oder mehreren Basen versetzt. Beispielsweise können die Mehrstufen-Copolymere in Form von wässrigen Dispersionen mit Base versetzt werden oder vorzugsweise die Mehrstufen-Copolymere in organischen Lösungsmitteln. Hierbei können anorganische Basen oder vorzugsweise organische Basen eingesetzt werden. Beispiele für anorganische Basen sind Alkali- oder Erdalkalihydroxide oder Ammoniak, insbesondere Natrium- oder Kaliumhydroxid. Beispiele für organische Basen sind Alkanolamine oder Alkyl- oder Arylamine, insbesondere Di- oder Trialkylamine. Bevorzugte Alkanolamine sind Dimethylethanolamin, Ethanolamin, Diethanolamin, Triethanolamin, 2-Aminomethylpropanol, Diethylethanolamin, Methyldiethanolamin, Dimethylisopropylamin und Dimethylisopropanolamin. Bevorzugte Alkyl- oder Arylamine sind Trimethylamin, Triethylamin, Tributylamin, Dibutylamin, Dimethylanilin, Diethylanilin oder Triphenylamin. Die Menge an Base orientiert sich vorzugsweise an der einpolymerisierten Menge an ethylenisch ungesättigten, Säure-Gruppen tragenden Monomeren b1). Vorzugsweise werden 70 bis 130 mol%, besonders bevorzugt 80 bis 120 mol% Base eingesetzt, bezogen auf die in die Mehrstufen-Copolymere einpolymerisierten molaren Mengen an Monomereinheiten b1). Am meisten bevorzugt werden äquimolare Mengen an Base eingesetzt, bezogen auf die in die Mehrstufen-Copolymere einpolymerisierten molaren Mengen an Monomereinheiten b1). Die einpolymerisierten molaren Mengen an Monomereinheiten b1) können beispielsweise mittels ¹H NMR bestimmt werden. Mit diesen Maßnahmen kann beispielsweise die Stabilität der wässrigen Dispersionen der Mehrstufen-Copolymere weiter verbessert werden.

Bevorzugt sind Mehrstufen-Copolymere in Form von Festharzen, in Form von wässrigen Dispersionen oder in Form von in Wasser redispergierbaren Pulvern, die ein oder mehrere Basen enthalten.

Alternativ kann auf die Zugabe von Base zu den Mehrstufen-Copolymeren verzichtet werden.

Den Mehrstufen-Copolymeren können ein oder mehrere Emulgatoren und/oder ein oder mehrere Schutzkolloide zugesetzt werden. Damit sind beispielsweise stabilere wässrige Dispersionen von Mehrstufen-Copolymeren oder Mehrstufen-Copolymere in Form von wässrigen Dispersionen mit höheren Feststoffgehalten zugänglich.

Emulgatoren und/oder Schutzkolloide werden den Mehrstufen-Copolymeren vorzugsweise nach ihrer Herstellung mittels Polymerisation zugegeben, besonders bevorzugt den mittels Lösungspolymerisation erhaltenen Mischungen oder den Lösungen der Mehrstufen-Copolymere in organischen Lösungsmitteln oder den wässrigen Dispersionen der Mehrstufen-Copolymere.

Bevorzugt sind Mehrstufen-Copolymere in Form von Festharzen, in Form von wässrigen Dispersionen oder in Form von in Wasser redispergierbaren Pulvern, die ein oder mehrere Emulgatoren und/oder ein oder mehrere Schutzkolloide enthalten.

Beispiele für Emulgatoren sind insbesondere anionische Tenside und nichtionische Tenside. Beispiele für anionische Tenside sind Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ölsäuresulfonate, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten. Bevorzugt ist der Einsatz von Alkylethersulfaten oder Dodecylbenzenesulfonaten.

Vorzugsweise werden bis zu 10 Gew.-%, besonders bevorzugt 0,1 bis zu 7 Gew.-% und am meisten bevorzugt 1 bis 4 Gew.-% an einem oder mehreren Emulgatoren eingesetzt, bezogen auf das Trockengewicht der Mehrstufen-Copolymere.

Beispiele für Schutzkolloide sind Polyvinylalkohole; Polyvinylpyrrolidone; Polyvinylacetale; Polysaccharide; synthetische Polymere wie Poly(meth)acrylsäure, Copolymerisate von (Meth)acrylaten mit carboxylfunktionellen Comonomereinheiten, Poly-(meth)acrylamid, Polyvinylsulfonsäuren und deren wasserlöslichen Copolymere; Styrolmaleinsäure- und Vinylethermaleinsäure-Copolymere. Bevorzugte Schutzkolloide sind Polyvinylalkohole, insbesondere teilverseifte oder vollverseifte Polyvinylalkohole mit einem Hydrolysegrad von 80 bis 100 Mol-%. Besonders bevorzugt sind teilverseifte Polyvinylalkohole mit einem Hydrolysegrad von 80 bis 95 Mol-%, und insbesondere mit einer Höpplerviskosität, in 4 %-iger wässriger Lösung von 1 bis 30 mPas (Methode nach Höppler bei 20°C, DIN 53015). Die genannten Schutzkolloide sind mittels des Fachmanns bekannter Verfahren zugänglich.

Schutzkolloide sind in einer Menge von vorzugsweise 0,1 bis 20 Gew.-%, mehr bevorzugt 0,1 bis 15 Gew.-% und besonders bevorzugt 1 bis 10 Gew.-%, bezogen auf das Trockengewicht der Mehrstufen-Copolymere, enthalten.

Zur Verbesserung der anwendungstechnischen Eigenschaften können den Mehrstufen-Copolymeren ein oder mehrere Zusätze zugegeben werden, vorzugsweise nach ihrer Herstellung mittels Polymerisation, besonders bevorzugt den mittels Lösungspolymerisation erhaltenen Mischungen oder den Lösungen der Mehrstufen-Copolymere in organischen Lösungsmitteln oder den wässrigen Dispersionen der Mehrstufen-Copolymere. Beispiele für Zusätze sind Pigmente, Füllstoffe, Schaumstabilisatoren, Hydrophobierungsmittel oder Zementverflüssiger.

Die Mehrstufen-Copolymere in Form von wässrigen Dispersionen haben einen Feststoffgehalt von vorzugsweise 5 bis 75%, mehr bevorzugt 10 bis 70%, besonders bevorzugt 20 bis 60% und am meisten bevorzugt 30 bis 50%.

Die Mehrstufen-Copolymere in Form von Schutzkolloid-freien und Emulgator-freien wässrigen Dispersionen haben einen Feststoffgehalt von vorzugsweise 5 bis 30%, besonders bevorzugt 6 bis 20% und am meisten bevorzugt 7 bis 10%.

Die Mehrstufen-Copolymere in Form von wässrigen Dispersionen, die entweder Schutzkolloide oder Emulgatoren enthalten, haben einen Feststoffgehalt von vorzugsweise >10 bis 40%, besonders bevorzugt 15 bis 35% und am meisten bevorzugt 20 bis 30%.

Die Mehrstufen-Copolymere in Form von Schutzkolloid und Emulgatoren enthaltenden wässrigen Dispersionen haben einen Feststoffgehalt von vorzugsweise 10 bis 75%, besonders bevorzugt 20 bis 60% und am meisten bevorzugt 30 bis 50%.

Die Mehrstufen-Copolymere haben zahlenmittlere Molekulargewichte von vorzugsweise 5.000 bis 1.500.000 Dalton, besonders bevorzugt 10.000 bis 500.000 Dalton und am meisten bevorzugt 15.000 bis 200.000 Dalton.

Mehrstufen-Copolymere in Form von wässrigen Dispersionen haben Viskositäten von vorzugsweise 1 bis 50.000 mPas, besonders bevorzugt 2 bis 10.000 mPas und am meisten bevorzugt 5 bis 1.000 mPas.

Die Partikelgröße der Mehrstufen-Copolymere beträgt vorzugsweise von 200 bis 10.000 nm, mehr bevorzugt 300 bis 5.000 nm, besonders bevorzugt 600 bis 4.000 nm und am meisten bevorzugt 1.000 bis 3.000 nm.

Die Methoden zur Bestimmung des Feststoffgehalts, des Molekulargewichts, der Viskosität sowie der Partikelgröße sind weiter unten für die Beispiele beschrieben.

Ein weiterer Gegenstand der Erfindung sind Verfahren zur Herstellung von Mehrstufen-Copolymeren in Form von in Wasser redispergierbaren Pulvern, dadurch gekennzeichnet, dass wässrige Dispersionen der erfindungsgemäßen Mehrstufen-Copolymere getrocknet werden.

Zur Herstellung der in Wasser redispergierbaren Polymerpulver werden allgemein die wässrigen Dispersionen der Mehrstufen-Copolymere (Polymerdispersionen), gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung kann dabei in üblichen Sprühtrocknungsanlagen durchgeführt werden, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Copolymers und gewünschtem Trocknungsgrad, gewählt. Beispiele für Trocknungshilfen sind die oben genannten Schutzkolloide, insbesondere Polyvinylalkohol. In der Regel wird die Trocknungshilfe (Schutzkolloid) in einer Gesamtmenge von 3 bis 30 Gew.-%, insbesondere 5 bis 20 Gew.-%, bezogen auf die polymeren Bestandteile der Dispersion, eingesetzt.

Bei der Verdüsung zur Trocknung wässriger Polymerdispersionen hat sich vielfach ein Gehalt von bis zu 3 Gew.-% Antischaummittel, bezogen auf das Basispolymerisat, als günstig erwiesen. Zur Erhöhung der Lagerfähigkeit durch Verbesserung der Verblockungsstabilität kann das erhaltene Polymerpulver beispielsweise mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaolin, kalziniertes Kaolin, Silicate mit Teilchengrößen vorzugsweise im Bereich von 10 nm bis 100 µm.

Die Viskosität der zu trocknenden Mischung wird über den Feststoffgehalt so eingestellt, dass ein Wert von bevorzugt < 1.500 mPas, besonders bevorzugt < 500 mPas erhalten wird (Viskosität bei 20 Umdrehungen und 25,0°C). Der Feststoffgehalt der zu trocknenden Mischung beträgt bevorzugt > 35%, besonders bevorzugt > 40%.

Zur Verbesserung der anwendungstechnischen Eigenschaften können bei der Trocknung weitere Zusätze zugegeben werden. Weitere, in bevorzugten Ausführungsformen enthaltene Bestandteile von Dispersionspulverzusammensetzungen sind beispielsweise Pigmente, Füllstoffe, Schaumstabilisatoren, Hydrophobierungsmittel oder Zementverflüssiger.

Die Mehrstufen-Copolymere, insbesondere in Form von wässrigen Dispersionen, eignen sich allgemein als Bindemittel für Beschichtungsmittel oder insbesondere als Klebemittel, beispielsweise für Farben, Fasern, Textilien, Leder, Papier oder Teppiche. Bevorzugt ist auch der Einsatz der Mehrstufen-Copolymere als Bindemittel zur Bindung von Fasermaterialien, insbesondere für die Herstellung von textilen Flächengebilden, wie Vliesstoffe (Nonwovens), Wirk- und Webwaren, Leder und Pelze, oder Teppichen.

Ferner können die Mehrstufen-Copolymere auch als Additiv für die Herstellung von Formkörpern, insbesondere für Komposit-Bauteile auf Basis von radikalisch vernetzbaren Polymerisatzusammensetzungen, wie ungesättigten Polyesterharzen (UP-Harze), eingesetzt werden. Zudem können die Mehrstufen-Copolymere auch als Kaugummirohmasse (gum base) bei der Herstellung von Kaugummi Verwendung finden.

Die Mehrstufen-Copolymere können auch in bauchemischen Produkten eingesetzt werden. Sie können alleine oder in Kombination mit herkömmlichen Polymerdispersionen oder Dispersionspulvern eingesetzt werden, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas beispielsweise für die Herstellung von Verlaufsmassen, Bauklebern, Putzen, Spachtelmassen, Fugenmörteln, Dichtschlämmen, Wärmedämmverbundsysteme oder Farben, beispielsweise Pulverfarben. Unter Bauklebern sind Fliesenkleber oder Vollwärmeschutzkleber bevorzugte Einsatzgebiete. Bevorzugte Anwendungsgebiete sind auch Verlaufsmassen, bevorzugte Verlaufsmassen sind selbstverlaufende Bodenspachtelmassen und Estriche.

Vorteilhafterweise lassen sich die erfindungsgemäßen Mehrstufen-Copolymere sehr gut und in hohem Umfang biologisch oder unter natürlichen Bedingungen abbauen. Der Begriff bioabbaubare Copolymere bedeutet allgemein, dass die Copolymere ganz oder teilweise oder anteilig biologisch, das heißt unter Einwirkung von Mikroorganismen, oder generell unter natürlichen Bedingungen, insbesondere unter Einwirkung von basischen Medien, abbaubar sind, insbesondere besser abbaubar sind als entsprechende Polymere, die beispielsweise Monomereinheiten a2) und b1) aber keine Monomereinheiten a1) enthalten.

Besonders überraschend war, dass mit den erfindungsgemäßen Verfahren zyklische Ketenacetal-Monomere mit hoher Ausbeute in die Mehrstufen-Copolymere einpolymerisiert werden konnten und das Problem der Hydrolyse der zyklischen Ketenacetal-Monomere bei der Herstellung von Polymerdispersionen oder beim Einpolymerisieren von ethylenisch ungesättigten Säuren zumindest zurückgedrängt oder gar eliminiert werden konnte. Hydrolyse der zyklischen Ketenacetal-Monomere lässt sich beispielsweise gaschromatographisch quantifizieren. Nach der erfindungsgemäßen Vorgehensweise erfolgte der Einbau der erfindungsgemäßen zyklischen Ketenacetale a1) in die Copolymere vorteilhaft selektiv unter Ringöffnung, wodurch die erfindungsgemäßen Monomereinheiten a1) der Formel 2 gebildet wurden. Nebenreaktionen, wie Vinylpolymerisation oder Polymerisation unter Eliminierung von beispielsweise Aldehyden oder Ketonen, traten vorzugsweise in keinem signifikanten Umfang auf. Die erfindungsgemäß zugänglichen Polymerdispersionen sind überraschend stabil, auch ohne Emulgatoren oder Schutzkolloide als Stabilisierungsmittel. Mit den bevorzugten Ausführungsformen der vorliegenden Erfindung konnten diese Ziele noch besser erreicht werden.

Darüber hinaus zeigen die Mehrstufen-Copolymere überraschend hohe Klebrigkeiten und nach Applikation überraschend hohe Adhäsion und Kohäsion.

Die nachfolgenden Beispiele dienen der weiteren Erläuterung der Erfindung:
Bestimmung der zahlenmittleren und massenmittleren Molekulargewichte Mn, Mw und der Polydispersität mittels SEC (Size-Exclusion Chromatography):
Die Messung erfolgte gegen Polystyrol-Standard in THF bei 35°C, einer Flussrate von 0,3 ml/min und Detektion mit RID (Brechungsindex-Detektor) auf einer PLgel MiniMIX-C Guard Säule von Agilent mit einem Injektionsvolumen von 20 µl.

Bestimmung der Glasübergangstemperatur Tg durch DSC (Differential Scanning Calorimetry/Dynamische Differenz Thermoanalyse): Die Messungen erfolgten an einem DSC-1 Gerät der Firma Mettler Toledo in einem Temperaturbereich von -150°C bis +150°C in zwei Durchläufen mit einer Heiz- beziehungsweise Kühlrate von 10 K/min, wobei der zweite Lauf zur Bestimmung der Glasübergangstemperatur genutzt wurde.

### Feststoffgehalt der Dispersionen:

Der Feststoffgehalt wurde an einer Heißwaage der Firma Sartorius bestimmt. 1 g Polymerprobe wurde dünn auf einem Aluminiummessteller verstrichen und bis zur Gewichtskonstanz bei 130°C getrocknet.

### Brookfield-Viskosität der Dispersionen:

Die Messung erfolgte an einem Viskosimeter DV-II der Firma Brookfield bei 23°C. Es wurde mit Spindel 1 bzw. Spindel 4 und einer Umdrehungszahl von 20 rpm bzw. 10 rpm gemessen.

Partikelgrößenverteilung (Z-Average) über dynamische Lichtstreuung (DLS) der Dispersionen:
Die Bestimmung der Partikelgrößenverteilung erfolgte an einem ZetaSizer Nano S der Firma Malvern mit der Softwareversion 2.2. Die Dispersion wurde mit vollentsalztem Wasser verdünnt und bei 20°C vermessen, der Z-Average (Dz) wurde von der Software berechnet. Detaillierte Informationen zur Berechnung von Dz finden sich unter der ISO 22412:2017 (Particle size analysis - Dynamic light scattering (DLS)).

### Beispiel 1:

Säuremodifiziertes MDO-haltiges Polyvinylacetat-Festharz:
241,3 g Ethylacetat, 30,5 g 2-Methylen-1,3-Dioxepan (MDO), 70,0 g Vinylacetat (VAM) und 0,7 g tert.- Butylperoxypivalat (PPV, 75%ig) wurden in einen Reaktor gegeben und auf 77°C aufgeheizt.

Eine Mischung aus 7,5 g Ethylacetat und 3,9 g PPV (75%ig) wurde über 300 min zudosiert.
45 min nach Start der Initiatordosierung wurde die Dosierung einer Mischung aus 81,3 g MDO und 176,0 g VAM gestartet und über 220 min dosiert.

Nach Ende der Monomerdosierung wurde über 20 min 18,6 g Acrylsäure eindosiert, dann erfolgte eine Verdünnung mit 125,1 g Ethylacetat, welches über 35 min zudosiert wurde. Der Ansatz wurde für weitere 60 min unter Rückfluss gehalten und dann auf Raumtemperatur abgekühlt.

Restmonomer und Lösemittel wurden durch Trocknen unter Vakuum entfernt.

Das erhaltene Mehrstufen-Copolymer in Form eines Festharzes hatte eine Glasübergangstemperatur Tg von 2°C und ein mittleres Molekulargewicht Mw von 26 kDa.

### Beispiel 2:

Sekundärdispersion des säuremodifizierten MDO-haltigen Festharzes aus Beispiel 1, ohne Emulgator-Zusatz:
25,5 g einer 20%igen Lösung des Festharzes aus Beispiel 1 in Aceton wurden mit 0,35 ml Dimethylethanolamin versetzt. Zu dieser Polymerlösung wurden unter Rühren 55 g Wasser gegeben. Die so erhaltene Dispersion wurde für 15 min mit einem Ultrathurrax der Firma IKA mit 14.000 rpm geschert. Das Lösemittel wurde am Rotationsverdampfer entfernt und eine stabile Sekundärdispersion des Polymers erhalten.

Die erhaltene Dispersion hatte einen Feststoffgehalt von 8,5%, eine Brookfield-Viskosität von 9 mPas sowie eine durchschnittliche Partikelgröße Dz von 1.003 nm.

### Beispiel 3:

Sekundärdispersion des säuremodifizierten MDO-haltigen Festharzes aus Beispiel 1, mit Schutzkolloid-Zusatz:
75 g einer 20%igen Lösung des Festharzes aus Beispiel 1 in Aceton wurden mit 1,04 ml Dimethylethanolamin versetzt.

Zu dieser Polymerlösung wurde unter Rühren eine Lösung aus 9,0 g einer 10%igen wässrigen Lösung von Polyvinylalkohol (Mowiol 4-88) und 55 g Wasser gegeben.

Die erhaltene Dispersion wurde für 15 min mit einem Ultrathurrax der Firma IKA mit 14.000 rpm geschert.

Das Lösemittel wurde am Rotationsverdampfer entfernt und eine stabile Sekundärdispersion des Polymers erhalten.

Die erhaltene Dispersion hatte einen Feststoffgehalt von 20,3%, eine Brookfield-Viskosität von 127 mPas sowie eine durchschnittliche Partikelgröße Dz von 2.382 nm.

### Beispiel 4:

Sekundärdispersion des säuremodifizierten MDO-haltigen Festharzes aus Beispiel 1, mit Emulgator-Zusatz:
75 g einer 20%igen Lösung des Festharzes aus Beispiel 1 in Aceton wurden mit 1,04 ml Dimethylethanolamin versetzt.

Zu dieser Polymerlösung wurde unter Rühren eine Lösung aus 0,9 g Natriumdodecylsulfat (SDS) und 50 g Wasser gegeben.

Die erhaltene Dispersion wurde für 15 min mit einem Ultrathurrax der Firma IKA mit 10.000 rpm geschert. Die Umdrehungszahl wurde hier vermindert zur Verringerung der Schaumbildung.

Das Lösemittel wurde am Rotationsverdampfer entfernt und eine stabile Sekundärdispersion des Polymers erhalten.

Die erhaltene Dispersion hatte einen Feststoffgehalt von 26,3%, eine Brookfield-Viskosität von 451 mPas sowie eine durchschnittliche Partikelgröße Dz von 1.251 nm.

### Beispiel 5:

Sekundärdispersion des säuremodifizierten MDO-haltigen Festharzes aus Beispiel 1, mit Emulgator- und Schutzkolloid-Zusatz: 950 g einer 20%igen Lösung des Festharzes aus Beispiel 1 in Aceton wurden mit 13,2 ml Dimethylethanolamin versetzt.

Zu dieser Polymerlösung wurde unter Rühren eine Emulgatorlösung enthaltend 7,6 g Natriumdodecylsulfat und 76 g einer 10%igen wässrigen Lösung von Polyvinylalkohol (Mowiol 4-88) und 250 g Wasser gegeben.

Die erhaltene Dispersion wurde für 15 min mit einem Ultrathurrax der Firma IKA mit 14.000 rpm geschert. Das Lösemittel wurde am Rotationsverdampfer entfernt und eine stabile Sekundärdispersion des Polymers erhalten.

Die erhaltene Dispersion hatte einen Feststoffgehalt von 43,7%, eine Brookfield-Viskosität von 151 mPas sowie eine durchschnittliche Partikelgröße Dz von 1.924 nm.

### Vergleichsbeispiel 6:

Nicht-säuremodifiziertes MDO-haltiges Polyvinylacetat-Festharz: 73,9 g Ethylacetat, 15,1 g 2-Methylen-1,3-Dioxepan (MDO), 35,1 g Vinylacetat (VAM) und 0, 2 g tert.-Butylperoxypivalat (PPV, 75%ig) wurden in einen Reaktor gegeben und auf 77°C aufgeheizt. Eine Mischung aus 2,3 g Ethylacetat und 1,2 g PPV (75%ig) wurde über 300 min zudosiert.

45 min nach Start der Initiatordosierung wurde die Dosierung einer Mischung aus 53,3 g MDO und 124,5 g VAM gestartet und über 240 min dosiert.

15 min nach Ende der Monomerdosierung erfolgte eine Verdünnung mit 76,7 g Ethylacetat, welches über 45 min zudosiert wurde.

Der Ansatz wurde für weitere 50 min unter Rückfluss gehalten und dann auf Raumtemperatur abgekühlt.

Restmonomer und Lösemittel wurden durch Trocknen unter Vakuum entfernt.

Das erhaltene Polymer hatte eine Glasübergangstemperatur Tg von 0°C und ein mittleres Molekulargewicht Mw von 43 kDa.

### Vergleichsbeispiel 7:

Dispergierungsversuch des nicht-säuremodifizierten MDO-haltigen Festharzes aus Vergleichsbeispiel 6, mit Emulgator- und Schutzkolloid-Zusatz:
Zu 75 g einer 20%igen Lösung des Festharzes aus Vergleichsbeispiel 6 in Aceton wurde unter Rühren eine Emulgatorlösung enthaltend 0,6 g Natriumdodecylsulfat und 6 g einer 10%igen wässrigen Lösung von Polyvinylalkohol (Mowiol 4-88) und 20 g Wasser gegeben.

Die erhaltene Mischung wurde für 15 min mit einem Ultrathurrax der Firma IKA mit 14.000 rpm geschert.

Das Lösemittel wurde am Rotationsverdampfer entfernt, wobei das Polymer als Bodensatz ausfiel und keine Dispersion erhalten wurde.

### Vergleichsbeispiel 8:

Dispergierungsversuch des nicht-säuremodifizierten MDO-haltigen Festharzes aus Vergleichsbeispiel 6, mit Emulgator- und Polyacrylsäure-Zusatz:
Zu 50 g einer 20%igen Lösung des Festharzes aus Beispiel 6 in Aceton wurde unter Rühren eine Emulgatorlösung enthaltend 0,4 g Natriumdodecylsulfat, 4 g einer 10%igen wässrigen Lösung von Polyvinylalkohol (Mowiol 4-88), 500 mg Polyacrylsäure (Mw = 1800 g/mol) sowie 0,69 ml Dimethylethanolamin und 13 g Wasser gegeben.

Die erhaltene Dispersion wurde für 15 min mit einem Ultrathurrax der Firma IKA mit 14.000 rpm geschert.

Das Lösemittel wurde am Rotationsverdampfer entfernt, wobei das Polymer als Bodensatz ausfiel und keine Dispersion erhalten wurde.

### Vergleichsbeispiel 9:

Versuch einer Emulsionspolymerisation von MDO (Nachstellung von ACS Macro Lett. 2021, 10, 5, Seiten 591 bis 597):
Zu 310 ml Wasser wurden 16,7 g Disponil FES 32, 25 mg FeSO₄*7 H₂O in 16 ml Wasser, sowie 3,5 g einer 1%igen wässrigen Lösung von EDTA und 0,06 ml 2M Natronlauge gegeben und mittels Zugabe von 25%iger wässriger Ammoniumhydroxidlösung auf einen pH-Wert von 8 eingestellt. Das Reaktionsgefäß wurde auf 40°C aufgeheizt.

Über einen Zeitraum von 60 min wurde eine Mischung aus 173,0 g Vinylacetet (VAM) und 43,9 g 2-Methylen-1,3-Dioxepan (MDO) zudosiert.

Zeitgleich wurde über 60 min eine Mischung aus 46,4 g Wasser, 1,4 g einer 50%igen wässrigen Lösung von 2-Acrylamido-2-methyl-propansulfonsäure (AMPS), 1,6 g einer 70%igen wässrigen Lösung von Tergitol sowie 6,2 g Disponil FES 32 dosiert.

Parallel zur Monomerdosierung erfolgte über 70 min die Dosierung der Initiatorphase, bestehend aus 1,4 g Ammoniumperoxodisulfat, 0,64 g tert.-Butylhydroperoxid (tBHP) und 38,6 g Wasser, sowie die Dosierung der Reduktionsphase bestehend aus 2,6 g FF6 in 37,6 g Wasser. Die Polymerisation erfolgte bei 40°C. Durch die Zugabe von 25%iger wässriger Ammoniumhydroxidlösung wurde ein pH-Wert von 8 aufrechterhalten.

Die erhaltene Dispersion hatte eine durchschnittliche Partikelgröße von 164 nm und einen Feststoffgehalt von 30,7%.

Im Roh-¹H-NMR der Dispersion in CDCl₃ fand sich bei 4,05 ppm ein Triplett, welches charakteristisch für das Hydrolyseprodukt von MDO, 4-Hydroxybutylacetat ist. Dieses ließ sich auch gaschromatographisch in der Dispersion nachweisen.

Eine Trocknung der Dispersion und erneute Untersuchung des resultierenden Feststoffes via 1H-NMR zeigten, dass das Polymerisat lediglich zu 1,9 mol-% aus polymerisiertem MDO (Triplett bei 3,95 ppm in CDCl₃) bestand (Theorie: 16,1 mol-%).

### Vergleichsbeispiel 10:

Versuch der Herstellung eines Crotonsäure-modifizierten MDO-haltigen Polyvinylacetat-Festharzes bei gleichzeitiger Dosierung von Säure-Monomer und MDO:
75,6 g Ethylacetat, 2,6 g 2-Methylen-1,3-Dioxepan (MDO), 48,8 g Vinylacetat (VAM) , 1,6 g Crotonsäure und 0,2 g tert.-Butylperoxypivalat (PPV, 75%ig) wurden in einen Reaktor gegeben und auf 77°C aufgeheizt.

Eine Mischung aus 2,4 g Ethylacetat und 1,23 g PPV (75%ig) wurde über 300 min zudosiert.

45 min nach Start der Initiatordosierung wurde die Dosierung einer Mischung aus 9,1 g MDO, 10,8 g Crotonsäure und 172,9 g VAM gestartet und über 240 min dosiert. Nach Dosierende wurde der Ansatz für weitere 60 min unter Rückfluss gehalten und dann auf Raumtemperatur abgekühlt.

Restmonomer und Lösemittel wurden durch Trocknen unter Vakuum entfernt.

Das erhaltene Polymer hatte eine Glasübergangstemperatur Tg von 42°C und ein mittleres Molekulargewicht Mw von 58 kDa. Über ¹H NMR-Spektroskopie konnte keinerlei Einbau von MDO nachgewiesen werden.

### Vergleichsbeispiel 11:

Versuch der Herstellung eines säuremodifizierten MDO-haltigen Polyvinylacetat-Festharzes in Methanol:
112,7 g Methanol, 14,2 g 2-Methylen-1,3-Dioxepan (MDO), 30,8 g Vinylacetat (VAM) und 0,3 g tert.-Butyl-peroxypivalat (PPV, 75%ig) wurden in einen Reaktor gegeben und auf 77°C aufgeheizt.

Eine Mischung aus 3,5 g Ethylacetat und 1,8 g PPV (75%-ig) wurde über 300 min zudosiert.

45 min nach Start der Initiatordosierung wurde die Dosierung einer Mischung aus 37,9 g MDO und 82,2 g VAM gestartet und über 220 min dosiert.

Nach Ende der Monomerdosierung wurde über 20 min 8,7 g Acrylsäure eindosiert, dann erfolgte eine Verdünnung mit 58,4 g Methanol, welches über 35 min zudosiert wurde.

Der Ansatz wurde für weitere 60 min unter Rückfluss gehalten und dann auf Raumtemperatur abgekühlt.

Restmonomer und Lösemittel wurden durch Trocknen unter Vakuum entfernt.

Das erhaltene Polymer hatte eine Glasübergangstemperatur Tg von 41°C und ein mittleres Molekulargewicht Mw von 25 kDa. Über ¹H NMR-Spektroskopie konnte keinerlei Einbau von MDO nachgewiesen werden.

### Beispiel 12:

Säuremodifiziertes MDO-haltiges Polyvinylacetat-Festharz:
591 g Ethylacetat, 135 g 4-Methylen-1,3-Dioxepan (MDO), 187,0 g Vinylacetat (VAM) und 1,3 g tert.-Butyl-peroxypivalat (PPV, 75%ig) wurden in einen Reaktor gegeben und ein Äquivalent von 147 g Ethylen aufgedrückt. Dann wurde auf 77°C aufgeheizt.

Eine Mischung aus 31 g Ethylacetat und 16 g PPV (75%ig) wurde über 300 min zudosiert.

45 min nach Start der Initiatordosierung wurde die Dosierung einer Mischung aus 397 g MDO und 727 g VAM gestartet und über 220 min dosiert.

Nach Ende der Monomerdosierung wurde über 20 min 93 g Acrylsäure eindosiert, dann erfolgte eine Verdünnung mit 713 g Ethylacetat, welches über 45 min zudosiert wurde. Der Ansatz wurde für weitere 50 min unter Rückfluss gehalten und dann auf 30°C abgekühlt.

Restmonomer und Lösemittel wurden durch Trocknen unter Vakuum entfernt.

Das erhaltene Mehrstufen-Copolymere in Form eines Festharzes hatte eine Glasübergangstemperatur Tg von -15°C und ein mittleres Molekulargewicht Mw von 33 kDa.

### Beispiel 13:

Sekundärdispersion des säuremodifizierten MDO-haltigen Polyvinylacetat-Festharzes aus Beispiel 12, mit Emulgator- und Schutzkolloid-Zusatz:
500 g einer 20%igen Lösung des Festharzes aus Beispiel 12 in Aceton wurden mit 7,0 ml Dimethylethanolamin versetzt.

Zu dieser Polymerlösung wurde unter Rühren eine Emulgatorlösung enthaltend 4,0 g Natriumdodecylsulfat und 40 g einer 10%igen wässrigen Lösung von Polyvinylalkohol (Mowiol 4-88) und 130 g Wasser gegeben.

Die erhaltene Dispersion wurde für 15 min mit einem Ultrathurrax der Firma IKA mit 14 000 rpm geschert. Das Lösemittel wurde am Rotationsverdampfer entfernt und eine stabile Sekundärdispersion des Polymers erhalten.

Die erhaltene Dispersion hatte einen Feststoffgehalt von 37,6%, eine Brookfield-Viskosität von 26.340 mPas sowie eine durchschnittliche Partikelgröße Dz von 1.114 nm.

### Vergleichsbeispiel 14:

Versuch der Herstellung eines acrylsäuremodifizierten MDO-haltigen Polyvinylacetat-Festharzes bei gleichzeitiger Dosierung von Säure-Monomer und MDO:
60,3 g Ethylacetat, 7,6 g 2-Methylen-1,3-Dioxepan (MDO), 16,5 g Vinylacetat (VAM) und 0,2 g tert. -Butylperoxypivalat (PPV, 75%ig) wurden in einen Reaktor gegeben und auf 77°C aufgeheizt. Eine Mischung aus 3,5 g Ethylacetat und 1,0 g PPV (75%ig) wurde über 300 min zudosiert.

45 min nach Start der Initiatordosierung wurde die Dosierung einer Mischung aus 20,3 g MDO, 4,7 g Acrylsäure und 44,0 g VAM gestartet und über 240 min dosiert.

Nach Ende der Monomerdosierung erfolgte eine Verdünnung mit 34,7 g Ethylacetat, welches über 45 min zudosiert wurde. Der Ansatz wurde für weitere 60 min unter Rückfluss gehalten und dann auf Raumtemperatur abgekühlt.

Restmonomer und Lösemittel wurden durch Trocknen unter Vakuum entfernt.

Das erhaltene Copolymer in Form eines Festharzes hatte eine Glasübergangstemperatur Tg von 17,9°C und ein mittleres Molekulargewicht Mw von 39 kDa. Über ¹H NMR-Spektroskopie konnte nur ein partieller MDO-Einbau von 7,9 mol-% nachgewiesen werden (Theorie: 24,2 mol-%).

### Vergleichsbeispiel 15:

Versuch der Herstellung eines acrylsäuremodifizierten MDO-haltigen Polyvinylacetat-Festharzes bei paralleler Dosierung von Säure-Monomer und MDO:
60,3 g Ethylacetat, 7,6 g 2-Methylen-1,3-Dioxepan (MDO), 16,5 g Vinylacetat (VAM) und 0,2 g tert. -Butylperoxypivalat (PPV, 75%ig) wurden in einen Reaktor gegeben und auf 77°C aufgeheizt. Eine Mischung aus 3,5 g Ethylacetat und 1,0 g PPV (75%ig) wurde über 300 min zudosiert.

45 min nach Start der Initiatordosierung wurde die Dosierung einer Mischung aus 20,3 g MDO und 44,0 g VAM gestartet und über 240 min dosiert. Parallel dazu wurde 4,7 g Acrylsäure über 240 min aus einem separaten Vorlagegefäß dosiert.

Nach Ende der Monomerdosierung erfolgte eine Verdünnung mit 34,7 g Ethylacetat, welches über 45 min zudosiert wurde. Der Ansatz wurde für weitere 60 min unter Rückfluss gehalten und dann auf Raumtemperatur abgekühlt.

Restmonomer und Lösemittel wurden durch Trocknen unter Vakuum entfernt.

Das erhaltene Copolymer in Form eines Festharzes hatte eine Glasübergangstemperatur Tg von 16,4°C und ein mittleres Molekulargewicht Mw von 33 kDa. Über ¹H NMR-Spektroskopie konnte nur ein partieller MDO-Einbau von 8,8 mol-% nachgewiesen werden (Theorie: 24,2 mol-%).

## Patentansprüche

1. Mehrstufen-Copolymere erhältlich mittels mehrstufiger, radikalisch initiierter Masse- oder Lösungspolymerisation, **dadurch gekennzeichnet, dass**
a) in einer ersten Stufe ein oder mehrere zyklische Ketenacetal-Monomere a1) und ein oder mehrere Monomere a2) ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine, Diene, Vinylaromaten und Vinylhalogenide copolymerisiert werden, und
b) in einer weiteren Stufe in Gegenwart des Copolymers aus der ersten Stufe a) ein oder mehrere ethylenisch ungesättigte, Säure-Gruppen tragende Monomere b1) polymerisiert werden.

2. Mehrstufen-Copolymere gemäß Anspruch 1, **dadurch gekennzeichnet, dass** die Mehrstufen-Copolymere in Form von Festharzen, in Form von wässrigen Dispersionen oder in Form von in Wasser redispergierbaren Pulvern vorliegen.

3. Mehrstufen-Copolymere gemäß Anspruch 1 oder 2, **dadurch gekennzeichnet, dass** ein oder mehrere zyklische Ketenacetal-Monomere a1) Verbindungen der allgemeinen Formel 1 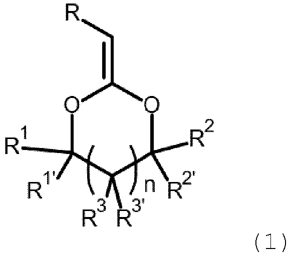 sind,
worin n = 0, 1, 2 oder 3 bedeutet;
R für ein Wasserstoffatom oder einen C₁-C₆-Alkyl-Rest steht;
R¹ und R² jeweils unabhängig voneinander für ein Wasserstoffatom, einen C₁-C₁₂-Alkyl-, Phenyl-, Vinyl- oder Halogen-Rest stehen; oder R¹ und R² zusammen mit den Kohlenstoffatomen, an die sie gebunden sind, einen fusionierten Benzolring oder einen fusionierten C₃-C₇-cycloaliphatischen Ring bilden; und
R¹' und R²' jeweils unabhängig voneinander für ein Wasserstoffatom, einen C₁-C₁₂-Alkyl-, Phenyl-, Vinyl- oder Halogen-Rest stehen; oder R¹ und R¹' und/oder R² und R²' eine exocyklische Doppelbindung bilden; und
R³ und R³' jeweils unabhängig voneinander für ein Wasserstoffatom, einen C₁-C₁₂-Alkyl-, Phenyl-, Vinyl- oder Halogen-Rest stehen; oder R³ und R³' eine exocyclische Doppelbindung oder eine spirocycloaliphatische Gruppe oder eine Spiro-2-methylen-1,3-dioxepane-Gruppe bilden; oder R³ und R³' mit den Kohlenstoffatomen, an die sie gebunden sind, eine interne Doppelbindung, einen fusionierten Benzolring oder einen fusionierten C₃-C₇-cycloaliphatischen Ring bilden;
wobei gegebenenfalls eine oder mehrere -(CR³R³')-Gruppen je durch ein Sauerstoffatom ersetzt sind.

4. Mehrstufen-Copolymere gemäß Anspruch 1 bis 3, **dadurch gekennzeichnet, dass** ein oder mehrere zyklische Ketenacetal-Monomere a1) ausgewählt werden aus der Gruppe umfassend 2-Methylen-1,3-dioxolan, 2-Methylen-4-methyl-1,3-dioxolan, 2-Methylen-4,5-dimethyl-1,3-dioxolane, 8-Methylen-7,9-dioxabicyclo[4.3.0]nonan, 2-Methylen-1,3-dioxan, 2-Methylen-5-methyl-1,3-dioxan, 2-Methylen-5,5-dimethyl-1,3-dioxan, 2-Methylen-1,3-dioxolan-5-spirocyclopentan, 2-Methylen-1,3-dioxolane-5-spirocyclopentan, 2-Methylen-1,3-Dioxepan, 2-Methylen-1,3-dioxocan, 2-Methylen-4-phenyl-1,3-dioxolan, 4,7-Dimethyl-2-methylen-1,3-dioxepan, 5,6-Benzo-2-methylen-1,3-dioxepan, 2-Methylen-1,3,6-trioxocan und 2-Methylen-1,3,5-Trioxan.

5. Mehrstufen-Copolymere gemäß Anspruch 1 bis 4, **dadurch gekennzeichnet, dass** das zyklische Ketenacetal-Monomer a1) 2-Methylen-1,3-Dioxepan ist.

6. Mehrstufen-Copolymere gemäß Anspruch 1 bis 5, **dadurch gekennzeichnet, dass** die Mehrstufen-Copolymere zu 20 bis 70 Gew.-% auf zyklischen Ketenacetal-Monomeren a1) basieren, bezogen auf das Gesamtgewicht der Monomere der Stufe a).

7. Mehrstufen-Copolymere gemäß Anspruch 1 bis 6, **dadurch gekennzeichnet, dass** die Mehrstufen-Copolymere zu 30 bis 80 Gew.-% auf Monomeren a2) basieren, bezogen auf das Gesamtgewicht der Monomere der Stufe a).

8. Mehrstufen-Copolymere gemäß Anspruch 1 bis 7, **dadurch gekennzeichnet, dass** ein oder mehrere ethylenisch ungesättigte, Säure-Gruppen tragenden Monomere b1) ausgewählt werden aus der Gruppe umfassend ethylenisch ungesättigte Carbonsäuren, ethylenisch ungesättigte Anhydride, ethylenisch ungesättigte Phosphorsäuren, ethylenisch ungesättigte Sulfonsäuren, ethylenisch ungesättigte Schwefelsäuren oder deren Salze.

9. Mehrstufen-Copolymere gemäß Anspruch 1 bis 8, **dadurch gekennzeichnet, dass** die Mehrstufen-Copolymere zu 0,5 bis 15 Gew.-% auf Monomeren b1) basieren, bezogen auf das Gesamtgewicht der Monomere der Stufe a).

10. Mehrstufen-Copolymere gemäß Anspruch 1 bis 9, **dadurch gekennzeichnet, dass** die Mehrstufen-Copolymere zu 25 bis 100 Gew.-% auf Monomeren b1) basieren, bezogen auf das Gesamtgewicht der Monomere der Stufe b).

11. Mehrstufen-Copolymere gemäß Anspruch 1 bis 10, **dadurch gekennzeichnet, dass** in Stufe b) als ethylenisch ungesättigte Monomere ausschließlich Monomere b1) eingesetzt werden.

12. Verfahren zur Herstellung der Mehrstufen-Copolymere aus Anspruch 1 bis 11 mittels mehrstufiger, radikalisch initiierter Masse- oder Lösungspolymerisation, **dadurch gekennzeichnet, dass**
a) in einer ersten Stufe ein oder mehrere zyklische Ketenacetal-Monomere a1) und ein oder mehrere Monomere a2) ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine, Diene, Vinylaromaten und Vinylhalogenide copolymerisiert werden und
b) in einer weiteren Stufe in Gegenwart des Copolymers aus der ersten Stufe a) ein oder mehrere ethylenisch ungesättigte, Säure-Gruppen tragende Monomere b1) polymerisiert werden.

13. Verfahren zur Herstellung der Mehrstufen-Copolymere nach Anspruch 12, **dadurch gekennzeichnet, dass** in Abwesenheit von Emulgatoren und/oder Schutzkolloiden polymerisiert wird.

14. Verfahren zur Herstellung der Mehrstufen-Copolymere in Form von wässrigen Dispersionen, **dadurch gekennzeichnet, dass** Mehrstufen-Copolymere nach Anspruch 12 oder 13 hergestellt und in Wasser dispergiert werden.

15. Verfahren zur Herstellung der Mehrstufen-Copolymere nach Anspruch 12 bis 14, **dadurch gekennzeichnet, dass** die Mehrstufen-Copolymere mit einer oder mehreren organischen oder anorganischen Basen versetzt werden.

16. Verfahren zur Herstellung der Mehrstufen-Copolymere nach Anspruch 12 bis 15, **dadurch gekennzeichnet, dass** den Mehrstufen-Copolymeren ein oder mehrere Emulgatoren und/oder ein oder mehrere Schutzkolloide zugesetzt werden.

17. Verwendung der Mehrstufen-Copolymere aus Anspruch 1 bis 11 als Bindemittel für Beschichtungsmittel oder Klebemittel, insbesondere für Farben, Textilien, Papier oder Teppiche, oder in bauchemischen Produkten.

## Claims

1. Multistage copolymers obtainable by means of multistage, free-radically initiated bulk or solution polymerization, **characterized in that**,
a) in a first stage, one or more cyclic ketene acetal monomers a1) and one or more monomers a2) selected from the group comprising vinyl esters of carboxylic acids having 1 to 15 carbon atoms, methacrylic esters or acrylic esters of carboxylic acids with unbranched or branched alcohols having 1 to 15 carbon atoms, olefins, dienes, vinylaromatics and vinyl halides are copolymerized, and,
b) in a further stage, one or more ethylenically unsaturated, acid group-bearing monomers b1) are polymerized in the presence of the copolymer from the first stage a).

2. The multistage copolymers as claimed in claim 1, **characterized in that** the multistage copolymers are in the form of solid resins, in the form of aqueous dispersions or in the form of water-redispersible powders.

3. The multistage copolymers as claimed in claim 1 or 2, **characterized in that** one or more cyclic ketene acetal monomers a1) are compounds of the general formula 1 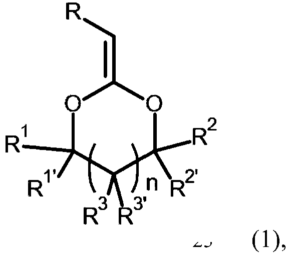
in which n = 0, 1, 2 or 3;
R is a hydrogen atom or a C₁-C₆ alkyl radical;
R¹ and R² are each independently a hydrogen atom or a C₁-C₁₂ alkyl, phenyl, vinyl or halogen radical; or R¹ and R², together with the carbon atoms to which they are bonded, form a fused benzene ring or a fused C₃-C₇ cycloaliphatic ring; and
R¹' and R²' are each independently a hydrogen atom or a C₁-C₁₂ alkyl, phenyl, vinyl or halogen radical; or R¹ and R¹' and/or R² and R²' form an exocyclic double bond; and
R³ and R³' are each independently a hydrogen atom or a C₁-C₁₂ alkyl, phenyl, vinyl or halogen radical; or R³ and R³' form an exocyclic double bond or a spirocycloaliphatic group or a spiro-2-methylene-1,3-dioxepane group; or R³ and R³', with the carbon atoms to which they are bonded, form an internal double bond, a fused benzene ring or a fused C₃-C₇ cycloaliphatic ring;
where optionally one or more -(CR³R³') groups are each replaced by an oxygen atom.

4. The multistage copolymers as claimed in claim 1 to 3, **characterized in that** one or more cyclic ketene acetal monomers a1) are selected from the group comprising 2-methylene-1,3-dioxolane, 2-methylene-4-methyl-1,3-dioxolane, 2-methylene-4,5-dimethyl-1,3-dioxolane, 8-methylene-7,9-dioxabicyclo[4.3.0]nonane, 2-methylene-1,3-dioxane, 2-methylene-5-methyl-1,3-dioxane, 2-methylene-5,5-dimethyl-1,3-dioxane, 2-methylene-1,3-dioxolane-5-spirocyclopentane, 2-methylene-1,3-dioxolane-5-spirocyclopentane, 2-methylene-1,3-dioxepane, 2-methylene-1,3-dioxocane, 2-methylene-4-phenyl-1,3-dioxolane, 4,7-dimethyl-2-methylene-1,3-dioxepane, 5,6-benzo-2-methylene-1,3-dioxepane, 2-methylene-1,3,6-trioxocane and 2-methylene-1,3,5-trioxane.

5. The multistage copolymers as claimed in claim 1 to 4, **characterized in that** the cyclic ketene acetal monomer a1) is 2-methylene-1,3-dioxepane.

6. The multistage copolymers as claimed in claim 1 to 5, **characterized in that** the multistage copolymers are based on cyclic ketene acetal monomers a1) to an extent of 20% to 70% by weight, based on the total weight of the monomers of stage a).

7. The multistage copolymers as claimed in claim 1 to 6, **characterized in that** the multistage copolymers are based on monomers a2) to an extent of 30% to 80% by weight, based on the total weight of the monomers of stage a).

8. The multistage copolymers as claimed in claim 1 to 7, **characterized in that** one or more ethylenically unsaturated, acid group-bearing monomers b1) are selected from the group comprising ethylenically unsaturated carboxylic acids, ethylenically unsaturated anhydrides, ethylenically unsaturated phosphoric acids, ethylenically unsaturated sulfonic acids, ethylenically unsaturated sulfuric acids, or salts thereof.

9. The multistage copolymers as claimed in claim 1 to 8, **characterized in that** the multistage copolymers are based on monomers b1) to an extent of 0.5% to 15% by weight, based on the total weight of the monomers of stage a).

10. The multistage copolymers as claimed in claim 1 to 9, **characterized in that** the multistage copolymers are based on monomers b1) to an extent of 25% to 100% by weight, based on the total weight of the monomers of stage b).

11. The multistage copolymers as claimed in claim 1 to 10, **characterized in that** exclusively monomers b1) are used as ethylenically unsaturated monomers in stage b).

12. A process for preparing the multistage copolymers from claim 1 to 11 by means of multistage, free-radically initiated bulk or solution polymerization, **characterized in that**,
a) in a first stage, one or more cyclic ketene acetal monomers a1) and one or more monomers a2) selected from the group comprising vinyl esters of carboxylic acids having 1 to 15 carbon atoms, methacrylic esters or acrylic esters of carboxylic acids with unbranched or branched alcohols having 1 to 15 carbon atoms, olefins, dienes, vinylaromatics and vinyl halides are copolymerized and,
b) in a further stage, one or more ethylenically unsaturated, acid group-bearing monomers b1) are polymerized in the presence of the copolymer from the first stage a).

13. The process for preparing the multistage copolymers as claimed in claim 12, **characterized in that** polymerization is effected in the absence of emulsifiers and/or protective colloids.

14. The process for preparing the multistage copolymers in the form of aqueous dispersions, **characterized in that** multistage copolymers are prepared as claimed in claim 12 or 13 and dispersed in water.

15. The process for preparing the multistage copolymers as claimed in claim 12 to 14, **characterized in that** the multistage copolymers are admixed with one or more organic or inorganic bases.

16. The process for preparing the multistage copolymers as claimed in claim 12 to 15, **characterized in that** one or more emulsifiers and/or one or more protective colloids are added to the multistage copolymers.

17. The use of the multistage copolymers from claim 1 to 11 as binders for coating compositions or adhesives, in particular for paints, textiles, paper or carpets, or in construction-chemical products.

## Revendications

1. Copolymères multi-étages pouvant être obtenus par polymérisation à plusieurs étapes, en masse ou en solution, initiée par voie radicalaire, **caractérisés en ce que**
a) dans une première étape, un ou plusieurs monomères cétène-acétal cyclique a1) et un ou plusieurs monomères a2), choisis dans le groupe comprenant les esters vinyliques d'acides carboxyliques comprenant 1 à 15 atomes de carbone, les esters d'acide méthacrylique ou les esters d'acide acrylique d'acides carboxyliques avec des alcools non ramifiés ou ramifiés comprenant 1 à 15 atomes de carbone, les oléfines, les diènes, les aromatiques de vinyle et les halogénures de vinyle, sont copolymérisés et
b) dans une étape supplémentaire, en présence du copolymère de la première étape a), un ou plusieurs monomères b1) éthyléniquement insaturés, portant des groupes acides sont polymérisés.

2. Copolymères multi-étages selon la revendication 1, **caractérisés en ce que** les copolymères multi-étages se trouvent sous la forme de résines solides, sous la forme de dispersions aqueuses ou sous la forme de poudres redispersibles dans l'eau.

3. Copolymères multi-étages selon la revendication 1 ou 2, **caractérisés en ce qu'**un ou plusieurs monomères cétène-acétal cyclique a1) sont des composés de formule générale 1 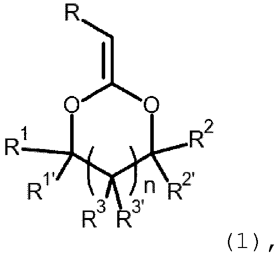
dans laquelle n = 0, 1, 2 ou 3 ;
R représente un atome d'hydrogène ou un radical C₁-C₆-alkyle ;
R¹ et R² représentent, à chaque fois indépendamment l'un de l'autre, un atome d'hydrogène, un radical C₁-C₁₂-alkyle, phényle, vinyle ou halogène ; ou R¹ et R² forment, conjointement avec les atomes de carbone auxquels ils sont liés, un cycle benzène fusionné ou un cycle C₃-C₇-cycloaliphatique fusionné ; et
R¹' et R²' représentent, à chaque fois indépendamment l'un de l'autre, un atome d'hydrogène, un radical C₁-C₁₂-alkyle, phényle, vinyle ou halogène ; ou R¹ et R¹' et/ou R² et R²' forment une double liaison exocyclique ; et
R³ et R³' représentent, à chaque fois indépendamment l'un de l'autre, un atome d'hydrogène, un radical C₁-C₁₂-alkyle, phényle, vinyle ou halogène ; ou R³ et R³' forment une double liaison exocyclique ou un groupe spirocycloaliphatique ou un groupe spiro-2-méthylène-1,3-dioxépane ; ou R³ et R³' forment, avec les atomes de carbone auxquels ils sont liés, une double liaison interne, un cycle benzène fusionné ou un cycle C₃-C₇-cycloaliphatique fusionné ;
un ou plusieurs groupes -(CR³R³') étant chacun le cas échéant remplacés par un atome d'oxygène.

4. Copolymères multi-étages selon la revendication 1 à 3, **caractérisés en ce qu'**un ou plusieurs monomères cétène-acétal cyclique a1) sont choisis dans le groupe comprenant le 2-méthylène-1,3-dioxolane, le 2-méthylène-4-méthyl-1,3-dioxolane, le 2-méthylène-4,5-diméthyl-1,3-dioxolane, le 8-méthylène-7,9-dioxabicyclo[4.3.0]nonane, le 2-méthylène-1,3-dioxane, le 2-méthylène-5-méthyl-1,3-dioxane, le 2-méthylène-5,5-diméthyl-1,3-dioxane, le 2-méthylène-1,3-dioxolane-5-spirocyclopentane, le 2-méthylène-1,3-dioxolane-5-spirocyclopentane, le 2-méthylène-1,3-dioxépane, le 2-méthylène-1,3-dioxocane, le 2-méthylène-4-phényl-1,3-dioxolane, le 4,7-diméthyl-2-méthylène-1,3-dioxépane, le 5,6-benzo-2-méthylène-1,3-dioxépane, le 2-méthylène-1,3,6-trioxocane et le 2-méthylène-1,3,5-trioxane.

5. Copolymères multi-étages selon la revendication 1 à 4, **caractérisés en ce que** le monomère cétène-acétal cyclique a1) est le 2-méthylène-1,3-dioxépane.

6. Copolymères multi-étages selon la revendication 1 à 5, **caractérisés en ce que** les copolymères multi-étages sont, à raison de 20 à 70% en poids, à base de monomères cétène-acétal cyclique a1), par rapport au poids total des monomères de l'étape a).

7. Copolymères multi-étages selon la revendication 1 à 6, **caractérisés en ce que** les copolymères multi-étages sont, à raison de 30 à 80% en poids, à base de monomères a2), par rapport au poids total des monomères de l'étape a).

8. Copolymères multi-étages selon la revendication 1 à 7, **caractérisés en ce qu'**un ou plusieurs monomères b1) éthyléniquement insaturés, portant des groupes acides sont choisis dans le groupe comprenant les acides carboxyliques éthyléniquement insaturés, les anhydrides éthyléniquement insaturés, les acides phosphoriques éthyléniquement insaturés, les acides sulfoniques éthyléniquement insaturés, les acides sulfuriques éthyléniquement insaturés ou leurs sels.

9. Copolymères multi-étages selon la revendication 1 à 8, **caractérisés en ce que** les copolymères multi-étages sont, à raison de 0,5 à 15% en poids, à base de monomères b1), par rapport au poids total des monomères de l'étape a).

10. Copolymères multi-étages selon la revendication 1 à 9, **caractérisés en ce que** les copolymères multi-étages sont, à raison de 25 à 100% en poids, à base de monomères b1), par rapport au poids total des monomères de l'étape b).

11. Copolymères multi-étages selon la revendication 1 à 10, **caractérisés en ce que** dans l'étape b), seuls des monomères b1) sont utilisés en tant que monomères éthyléniquement insaturés.

12. Procédé de préparation des copolymères multi-étages selon la revendication 1 à 11 par polymérisation à plusieurs étapes, en masse ou en solution, initiée par voie radicalaire, **caractérisé en ce que**
a) dans une première étape, un ou plusieurs monomères cétène-acétal cyclique a1) et un ou plusieurs monomères a2), choisis dans le groupe comprenant les esters vinyliques d'acides carboxyliques comprenant 1 à 15 atomes de carbone, les esters d'acide méthacrylique ou les esters d'acide acrylique d'acides carboxyliques avec des alcools non ramifiés ou ramifiés comprenant 1 à 15 atomes de carbone, les oléfines, les diènes, les aromatiques de vinyle et les halogénures de vinyle, sont copolymérisés et
b) dans une étape supplémentaire, en présence du copolymère de la première étape a), un ou plusieurs monomères b1) éthyléniquement insaturés, portant des groupes acides sont polymérisés.

13. Procédé de préparation des copolymères multi-étages selon la revendication 12, **caractérisé en ce qu'**on polymérise en l'absence d'émulsifiants et/ou de colloïdes protecteurs.

14. Procédé de préparation des copolymères multi-étages sous forme de dispersions aqueuses, **caractérisé en ce que** des copolymères multi-étages sont préparés selon la revendication 12 ou 13 et dispersés dans l'eau.

15. Procédé de préparation des copolymères multi-étages selon la revendication 12 à 14, **caractérisé en ce que** les copolymères multi-étages sont additionnés d'une ou de plusieurs bases organiques ou minérales.

16. Procédé de préparation des copolymères multi-étages selon la revendication 12 à 15, **caractérisé en ce qu'**un ou plusieurs émulsifiants et/ou un ou plusieurs colloïdes protecteurs est/sont ajouté(s) aux copolymères multi-étages.

17. Utilisation des copolymères multi-étages de la revendication 1 à 11 comme liant pour des agents de revêtement ou des adhésifs, en particulier pour des peintures, des textiles, du papier ou des tapis, ou dans des produits chimiques de construction.
